# EUROPEAN PATENT APPLICATION

(11) **EP 4 404 345 A2**
(43) Date of publication of application: **24.07.2024**
(21) Application number: 24152489.1
(22) Date of filing: 17.01.2024
(51) Int. Cl.: H01M 50/204, H01M 50/247, H01M 50/284, H01M 50/296

(54) **POWER TOOL AND BATTERY PACK FOR POWER TOOL**

(30) Priority: 19.01.2023 CN 202310090008
(71) Applicant: Techtronic Cordless GP, Anderson, SC 29621 (US)
(72) Inventor: LI, Sheng Ping, Dongguan City (CN); GUO, Zhao Jie, Dongguan City (CN)
(74) Representative: Novagraaf Group

(57) **Abstract**

The present invention relates to a battery pack, comprising: a battery pack housing; a battery unit accommodated in the battery pack housing; a printed circuit board (PCB) accommodated in the battery pack housing; and a power tool connection end accommodated in the battery pack housing and disposed on the PCB. The power tool connection end comprises an integral metal sheet electrical terminal, wherein, when the battery pack is mounted on the power tool, the metal sheet electrical terminal is electrically connected to an electrical connector of the power tool, the metal sheet electrical terminal having a terminal lower end, the terminal lower end being directly electrically connected to the PCB. The present invention further relates to a power tool comprising such a battery pack.

## Description

### Technical Field

The present invention relates to the field of power tools, and in particular to a power tool and a battery pack with a metal sheet electrical terminal for power tools.

### Background Art

The emergence of consumer electronics and energy revolution has spurred the development of lithium-ion batteries. As electronic technology develops at the present time, miniaturized devices and tools are steadily increasing in number, market demand for lithium ion secondary batteries is steadily increasing, and industrial output is also steadily increasing. Especially, handheld or cordless power tools have become highly convenient thanks to the development of battery technology, as a battery pack comprising a rechargeable secondary battery may be mounted on a handheld power tool to eliminate the need for any wires.

In an existing design, the power tool connection end of a battery pack is electrically connected to a control circuit, for example, a printed circuit board (PCB), of the battery pack through wires. In such a design, the wires, which have a high resistance, generate a large amount of heat in the battery pack; moreover, the battery pack may overheat after prolonged use of the power tool, and the wires may need to transmit a high current during the operation of the power tool to ensure proper operation of the power tool, wherein such a high current may also lead to safety issues with the battery pack due to the use of wires. Moreover, a design including wires requires more space, and the weld between a wire and a PCB or another component may come off or become faulty due to continuous vibration of the battery pack during operation, which also leads to safety issues and may render the power tool unable to operate properly.

Possible prolonged use of the battery pack may cause the problem of excessive heat generation, and so it is necessary to improve the design to reduce the heat generated by the battery pack while ensuring the reliability and safety of the battery pack.

### Summary of the Invention

An objective of the present invention is to solve at least some of the above-mentioned problems, wherein the present invention proposes a battery pack with improved thermal management and improved safety, as well as a cordless power tool comprising such a battery pack.

According to one aspect of the present application, a battery pack is disclosed, comprising:
a battery pack housing;
a battery unit accommodated in the battery pack housing;
a printed circuit board (PCB) comprising a control circuit and accommodated in the battery pack housing; and
a power tool connection end accommodated in the battery pack housing and disposed on the PCB;
wherein, the power tool connection end comprises an integral metal sheet electrical terminal, and, when the battery pack is mounted on the power tool, the metal sheet electrical terminal is electrically connected to an electrical connector of the power tool, the metal sheet electrical terminal having a terminal lower end, and the terminal lower end being directly electrically connected to the PCB.

In one embodiment of a battery pack according to the present application, the metal sheet electrical terminal has a substantially inverted U-shaped structure, the U-shaped structure extending along the power tool connection end.

In one embodiment of a battery pack according to the present application, the two legs of the U-shaped structure each comprise a terminal lower end, each terminal lower end being directly electrically connected to the PCB.

In one embodiment of a battery pack according to the present application, the metal sheet electrical terminal comprises a positive metal sheet electrical terminal and a negative metal sheet electrical terminal, the positive metal sheet electrical terminal and the negative metal sheet electrical terminal being separated by a spacer.

In one embodiment of a battery pack according to the present application, a bottom portion of the U-shaped structure is wider than a top portion of the U-shaped structure.

In one embodiment of a battery pack according to the present application, the bottom portion of the U-shaped structure is formed with an electrical contact portion for connecting to the electrical terminals of the power tool.

In one embodiment of a battery pack according to the present application, the positive metal sheet electrical terminal and the negative metal sheet electrical terminal are moulded together with the spacer.

In one embodiment of a battery pack according to the present application, the metal sheet electrical terminal is in the form of an integral metal sheet with three or more legs, each leg comprising a terminal lower end, and each terminal lower end being directly electrically connected to the PCB.

In one embodiment of a battery pack according to the present application, the metal sheet electrical terminal comprises a positive metal sheet electrical terminal and a negative metal sheet electrical terminal, each of the positive metal sheet electrical terminal and the negative metal sheet electrical terminal having a terminal lower end, and each terminal lower end being directly electrically connected to the PCB.

In one embodiment of a battery pack according to the present application, the battery pack housing comprises a battery pack upper housing and a battery pack lower housing, and the battery pack upper housing has a battery pack joint surface located at the top, a boss extending vertically to a certain height perpendicular to the battery pack joint surface, and a protruding column extending vertically to a certain height perpendicular to the boss, the power tool connection end being inserted into the protruding column of the battery pack upper housing.

In one embodiment of a battery pack according to the present application, the battery pack further comprises a heat-insulating plate substantially covering the metal sheet electrical terminal.

In one embodiment of a battery pack according to the present application, the battery pack further comprises a collector plate electrically connected to the PCB on the side of the PCB opposite to the power tool connection end.

In one embodiment of a battery pack according to the present application, the collector plate comprises a positive collector plate configured to be electrically connected to the positive electrode of the battery unit; and a negative collector plate configured to be electrically connected to the negative electrode of the battery unit.

In one embodiment of a battery pack according to the present application, the metal sheet electrical terminal comprises a positive metal sheet electrical terminal and a negative metal sheet electrical terminal, the terminal lower end of the positive metal sheet electrical terminal being directly electrically connected to the positive collector plate, and/or the terminal lower end of the negative metal sheet electrical terminal being directly electrically connected to the negative collector plate.

In one embodiment of a battery pack according to the present application, a plurality of electrical terminals are provided at the top of the protruding column, and the metal sheet electrical terminal is electrically connected to the electrical terminal of the protruding column, the electrical terminal of the protruding column being configured to be electrically connected to an electrical connector in the base of the power tool.

According to another aspect of the present application, a power tool is disclosed, comprising a battery pack according to an embodiment of the present application.

In the present application, the metal sheet electrical terminal is an integrated electrical terminal directly connected to a PCB to electrically connect from the PCB to the electrical terminal, replacing any additional wires used in a conventional design. By establishing a direct electrical connection to a PCB using an integrated electrical terminal, the heat generated during the operation of the battery pack may be reduced, and greater safety may be provided at higher currents. In addition, in a preferred design of the present application, the metal sheet electrical terminal has a substantially inverted U-shaped structure, which means that the metal sheet electrical terminal adopts a two-path design, wherein each leg is electrically connected to the PCB and the corresponding collector plate, which means that the metal sheet electrical terminal has two current paths in parallel to reduce or lower the current flowing through each leg or terminal lower end to reduce its current intensity, thus reducing the heating thereof. Moreover, a high current is transmitted to an electrode terminal through a collector plate, which can minimise the direct flow of large currents on the PCB, thus reducing the heating of the PCB. Further, using a metal sheet electrical terminal with more than one leg has the additional advantage of the formation of a redundant structure, wherein even if the terminal lower end of one leg is electrically disconnected from the PCB or the corresponding collector plate, the other leg remains electrically connected to the PCB and the corresponding collector plate, and so the battery pack can still supply power to the power tool through this other leg, thus ensuring the proper operation of the power tool.

Other characteristics and advantages of the present invention will become apparent by a perusal of the following detailed description with reference to the drawings.

### Brief Description of the Drawings

Objectives and characteristics of the present invention will become apparent from the following detailed description considered in conjunction with the drawings. However, it should be understood that the drawings are designed purely for illustrative purposes, and do not limit the present invention.
Fig. 1 is a schematic perspective view of a power tool according to an embodiment of the present invention;
Fig. 2 is a schematic perspective view of a battery pack for power tools according to an embodiment of the present invention;
Fig. 3 is a schematic diagram of an electrical connection between the battery pack and the power tool in an installed state of a power tool according to an embodiment of the present invention, wherein only the electrical connector of the power tool is shown;
Fig. 4 is a schematic perspective view of a battery pack according to an embodiment of the present invention, wherein the battery pack upper housing is removed to better illustrate the internal structure of the battery pack;
Fig. 5 is a sectional view of Fig. 4 taken along the line A-A of a battery pack according to an embodiment of the present invention;
Fig. 6 is a schematic perspective view of the power tool connection end and printed circuit board (PCB) of a battery pack according to an embodiment of the present invention, wherein the electrical connection between the power tool connection end and the PCB is shown;
Fig. 7 is a schematic perspective view of the power tool connection end and PCB of a battery pack according to an embodiment of the present invention from another perspective; and
Fig. 8 is a sectional view of the power tool connection end of a battery pack according to an embodiment of the present invention and the PCB taken along the line B-B in Fig. 6.

### Specific Embodiments

Technical solutions of the present invention will be clearly and completely described below in conjunction with the drawings, and, obviously, the described embodiments are only some, but not all, embodiments of the present invention. Any embodiments obtained by those of ordinary skill in the art on the basis of the described embodiments of the present invention without making inventive efforts fall into the protection scope of the present invention.

It should be noted that in the description of the present invention, unless otherwise specified or limited, terms like "connection" should be understood in a broad sense, wherein, for example, these terms can refer to fixed connection, detachable connection, or integrated connection; mechanical connection or electrical connection; direct connection or connection through an intermediate medium. Those of ordinary skill in the art can understand the specific meanings of the aforesaid terms in the present invention on the basis of actual circumstances. In addition, in the description of the present invention, unless otherwise specified, the phrase "a plurality of" indicates two or more. It should also be noted that orientations or positional relationships indicated by terms such as "central", "longitudinal", "lateral", "upper", "lower", "front", "rear", "left", "right", "vertical", "horizontal", "top", "bottom", "inner", "outer", "axial", "radial", and "circumferential" are usually based on the orientations or positional relationships shown in the drawings, are only intended for convenience of describing the present invention and brevity of description, rather than indicating or implying that the device or element referred to necessarily has a specific orientation or is constructed and operated in a specific orientation, and therefore should not be understood as a limitation of the protection scope of the present invention.

Reference terms including "an embodiment", "certain embodiments", "example", "specific example", and "certain examples" as mentioned throughout this description mean that specific features, structures, materials, or characteristics described in conjunction with the embodiment or example are contained in at least one embodiment or example of the present invention. In this specification, a schematic representation of said terms does not necessarily refer to the same embodiment or example. Furthermore, specific described features, structures, materials or characteristics may be suitably combined in any one or more embodiments or examples.

To allow those of ordinary skill in the art to easily understand the technical solutions of the present invention, the technical solutions of the present invention will be further described below in conjunction with the drawings, in which identical reference signs denote identical or similar elements.

The present invention relates to a power tool 100. While the concept of the present invention is described herein using examples such as reciprocating saws, the present invention is not limited thereto, and power tools may also be other types of power tools known or common in the art, such as drilling rigs, drill hammers, impact drills, other types of saws such as piercing saws, planers, pullers, milling cutters, grinding tools, angle grinders, vibration grinders, gardening tools, and/or multifunctional tools, wherein, indeed, the inventive concept disclosed herein is also applicable to these power tools.

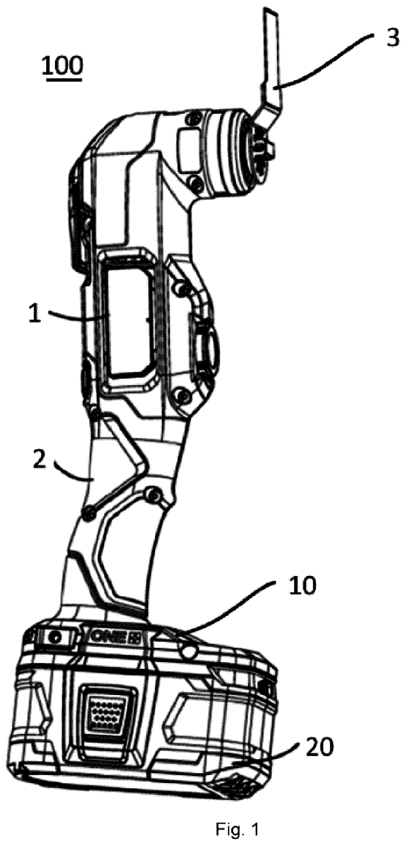

Fig. 1 is a schematic perspective view of a power tool 100 according to an embodiment of the present invention. The power tool 100 comprises a housing 1 and a battery pack 20 detachably mounted at one end of the housing 1, and the other end of the housing 1 is a machining tool, which, in some embodiments, is a saw blade 3, as shown in Fig. 1, for example.

The housing 1 has an elongated shape, with its overall direction of extension defined as vertical or longitudinal, the end where the machining tool is located is defined as the top or upper end, and the end where the battery pack 20 is located is defined as the bottom or lower end. In other words, the battery pack 20 is mounted at the bottom of the power tool 100. In addition, the terms "front", "forward direction" or "forepart" as well as "back", "rear" or "back side" and other related terms indicating the front and rear direction described in the following text are described relative to the machining tool of the power tool, the end of the battery pack or the base described in the following text facing and close to the machining tool is defined as the front end and may be referred to as the forward direction, forepart, etc., and the other end opposite to this end is referred to as the rear, back side, etc.

The housing 1 of the power tool 100 comprises a power system and an output shaft driven by the power system. In some embodiments, the power system comprises an electric motor accommodated in the housing 1, the electric motor driving the output shaft to perform corresponding actions. The housing 1 comprises a handle 2 located in a lower position, the handle 2 extending longitudinally. In some embodiments of the present invention, a base 10 is provided at the bottom of the power tool 10 (that is, the end of the handle 2 away from the housing 1) for installing the battery pack 20. In some embodiments of the present invention, the battery pack 20 is detachably mounted on the base 10.

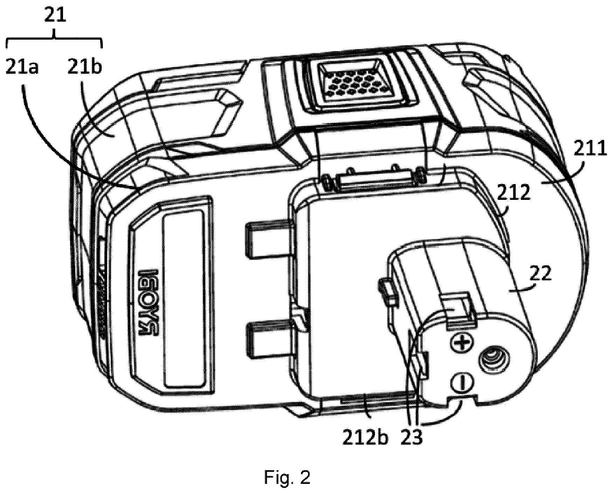

Fig. 2 is a schematic perspective view of a battery pack for power tools according to an embodiment of the present invention. The battery pack 20 comprises an internally hollow battery pack housing 21, which is designable according to the type of power tool and the number of required battery cells or battery units, and may be in various three-dimensional shapes, including, but not limited to, cuboids, cubes, spheres, or other regular or irregular polygons. A plurality of rechargeable battery units or batteries are accommodable in a closed space of the battery pack housing 21. In an embodiment of the present invention, a lithium battery unit is preferably used as a battery unit.

As shown in Fig. 2, the battery pack housing 21 comprises a battery pack upper housing 21a and a battery pack lower housing 21b. Since the battery pack 20 is detachably mountable onto the housing 1, the battery pack housing 21 and the housing 1 are shaped to fit each other to facilitate disassembly and assembly. Specifically, the battery pack upper housing 21a has a battery pack joint surface 211 located at the top, a boss 212 extending vertically to a certain height perpendicular to the battery pack joint surface 211, and a protruding column 22 extending vertically to a certain height perpendicular to the boss 212. The battery pack joint surface 211 may be an integral planar shape or a segmented surface with a plurality of steps, and, in some embodiments, there may be no bosses 212 present. Herein, the boss 212 may be in the shape of a rectangular boss, but is not limited thereto, wherein it may also be a circular boss, a triangular boss, or another regularly or irregularly shaped boss, and the height of the boss is designable according to specific applications. A plurality of electrical terminals 23, such as a positive terminal, a negative terminal, a grounding terminal, etc., are arranged at the top of the protruding column 22. The battery pack housing 21 and the electrical terminals 23 thereon may be referred to as the connection interface of the battery pack, which is used to connect to the housing 1.

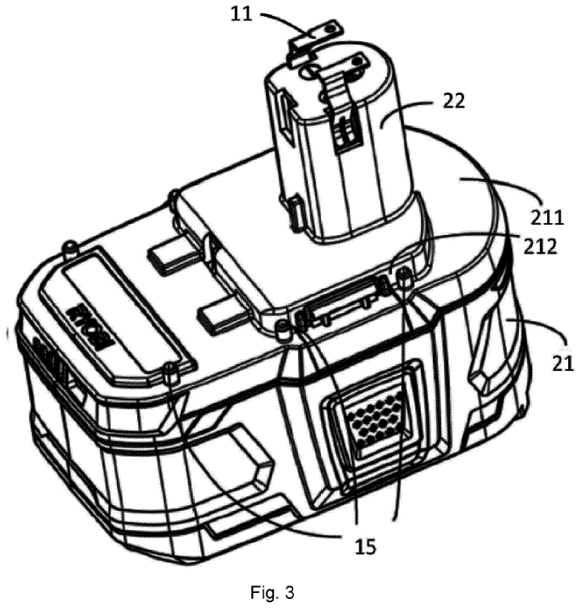

Fig. 3 is a schematic diagram of an electrical connection between the battery pack 20 and the power tool 100 in an installed state of a power tool according to an embodiment of the present invention, wherein only the electrical connector 11 of the power tool is shown. When the battery pack 20 is in an installed state, the battery pack 20 is inserted into the base 10 of the power tool 100, wherein the electrical terminals 23 of the battery pack 20 are electrically connected to the electrical connector 11 of the power tool 100, and so that the power of the battery pack 20 may be provided to the power tool 100, thereby allowing operations of the power tool 100, for example, moving a saw blade to and fro for cutting.

In one embodiment of the present invention, the base 10 of the power tool 100 comprises a groove with a shape complementary to the boss 212, a slot extending from the groove to the interior of the housing 1 with a shape complementary to the protruding column 22, and a base joint surface that abuts against the battery pack joint surface 211, wherein none of these features of the base 10 are shown in Fig. 3. When the battery pack housing 21 is mounted on the base 10, the protruding column 22 is inserted into the slot, the boss 212 is assembled into the groove, the base joint surface abuts against the battery pack joint surface 211, and the battery pack housing 21 and base 10 are connected to each other, for example, through mounting features (such as protrusions and threaded holes) on the protruding column 22 and the matching mounting features in the slot, wherein, at the same time, the electrical terminals 23 on the protruding column 22 come into contact with the electrical connector 11 in the slot, conducting a current to provide power to the battery pack 20. Correspondingly, when the battery pack housing 21 is removed from the base 10, the protruding column 22 is pulled out of the slot, the electrical terminals 23 are disjoined from the electrical connector 11 in the slot, the boss 212 is separated from the groove, and the base joint surface is disengaged from the battery pack joint surface 211. Thus, the battery pack housing 21 achieves a plug-pull fit with the base 10.

As shown in Fig. 3, in order to attenuate or even eliminate the vibrations transmitted from the housing 1 to the battery pack 20, at least one damping element 15 is arranged therebetween. While three pairs of damping elements 15 are shown in Fig. 3, the present invention is not limited thereto, and the number of damping elements 15 may be optionally set according to specific applications, such as only 1, 2, 3, 5, 7 or more, or another number. Fig. 3 shows that the damping element 15 has a cylindrical shape, but indeed, the damping element 15 may also have another shape. The damping element 15 may be made of an elastic material, for example, rubber or another material having elasticity. In addition, the damping element 15 may also be implemented in the form of flexible rubber instead of a rubber column.

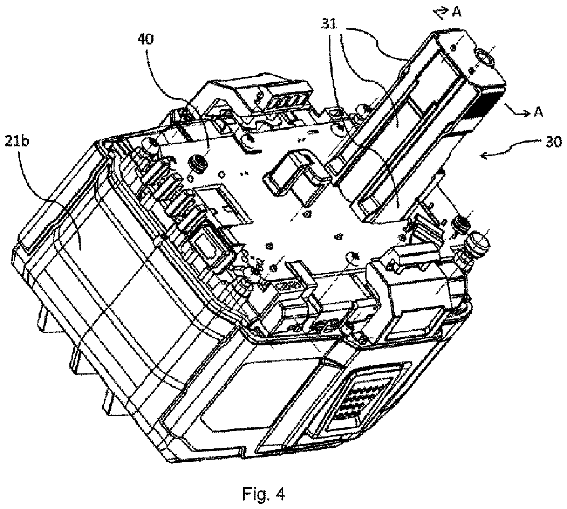

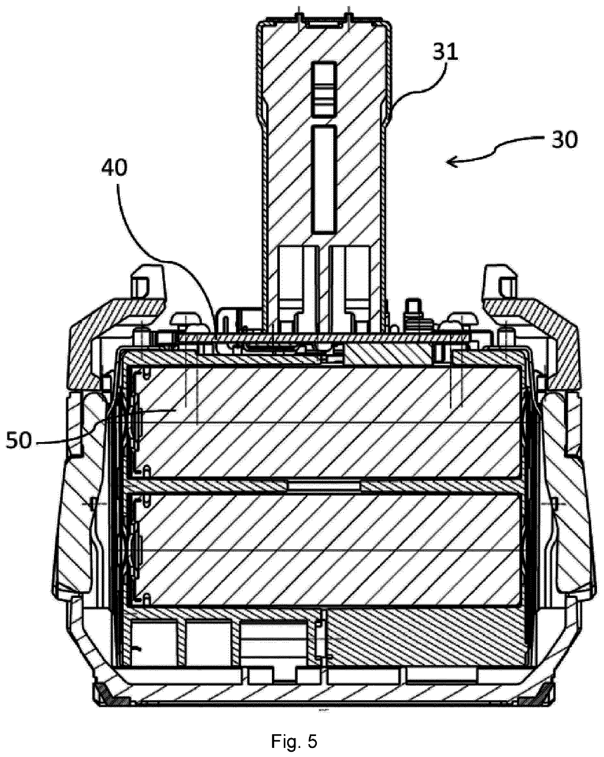

Fig. 4 is a schematic perspective view of a battery pack 20 according to an embodiment of the present invention, wherein the battery pack upper housing 21a is removed to better show the internal structure of the battery pack. Fig. 5 is a sectional view of the battery pack 20 according to an embodiment of the present invention in Fig. 4 taken along line A-A.

As shown in Fig. 4, the battery pack 20 comprises a power tool connection end 30, a printed circuit board (PCB) 40, a battery unit 50 (see Fig. 5), and other related components. The PCB 40 comprises a control circuit. In one embodiment of the present invention, the power tool connection end 30 is configured to be electrically connected to the power tool 100, so that the battery pack 20 can supply power to the power tool 100. In one embodiment of the present invention, the PCB 40 is electrically connected to the power tool connection end 30 and electrically connected to the battery unit 50 to control the power supply to the power tool 100. In an installed state, the power tool connection end 30 is inserted into the protruding column 22 of the battery pack upper housing 21a. In one embodiment of the present invention, the power tool connection end 30 is electrically connected to the electrical terminal 23, the electrical terminal 23 in turn is electrically connected to the electrical connector 11 of the power tool 100, and so that electricity may be transmitted from the battery pack 20 to the power tool 100, especially the power system, for example, an electric motor, thereof, thereby allowing operations of the power tool 100.

In one embodiment of the present invention, the power tool connection end 30 comprises a metal sheet electrical terminal 31, and the metal sheet electrical terminal 31 is configured to be electrically connected to the electrical terminal 23. When the power tool connection end 30 is disposed in the battery pack upper housing 21a, the metal sheet electrical terminal 31 is electrically connected to the electrical terminal 23 of the protruding column. In a preferred embodiment of the present invention, the metal sheet electrical terminal 31 is an integral electrical terminal directly connected to the PCB 40, thereby replacing any additional or separately arranged wires used in a conventional design.

In one embodiment of the present invention, as shown in Fig. 2, the electrical terminal 23 comprises a positive terminal, a negative terminal, and a grounding terminal. In one embodiment of the present invention, correspondingly, as shown in Fig. 3, the electrical connector 11 may comprise a positive electrode electrical connector 11, a negative electrode electrical connector 11, and a grounding electrical connector (not shown in Fig. 3).

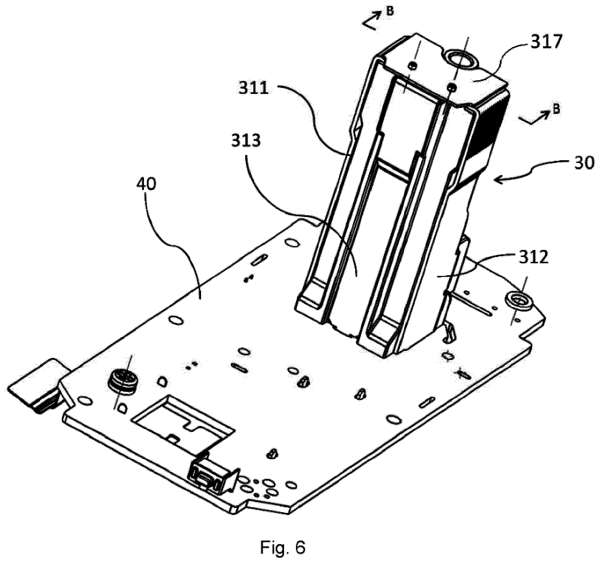

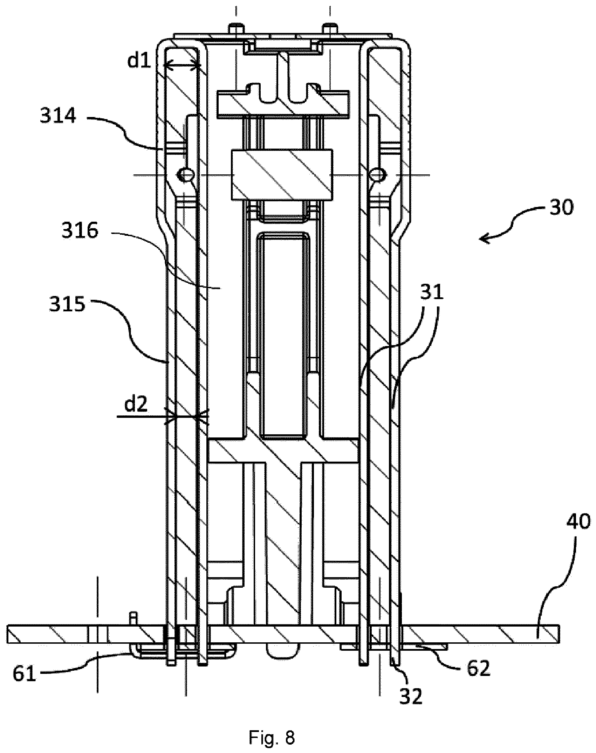

In one embodiment of the present invention, correspondingly, as shown in Fig. 6, the metal sheet electrical terminal 31 comprises a positive metal sheet electrical terminal 311, a negative metal sheet electrical terminal 312, and a grounding metal sheet electrical terminal 313. The grounding metal sheet electrical terminal 313 may also be a communication terminal. In one embodiment of the present invention, the positive metal sheet electrical terminal 311 and the negative metal sheet electrical terminal 312 are separated by a spacer 316 (as shown in Fig. 8). In one embodiment of the present invention, the positive metal sheet electrical terminal 311 and the negative metal sheet electrical terminal 312 are moulded together with the spacer 316. For example, as shown in Fig. 5 and Fig. 8, the metal sheet electrical terminal 31 on the left corresponds to the positive metal sheet electrical terminal 31, and the metal sheet electrical terminal 31 on the right corresponds to the negative metal sheet electrical terminal 31. Preferably, the spacer 316 is formed of an insulating material that is heat-resistant and thermally conductive.

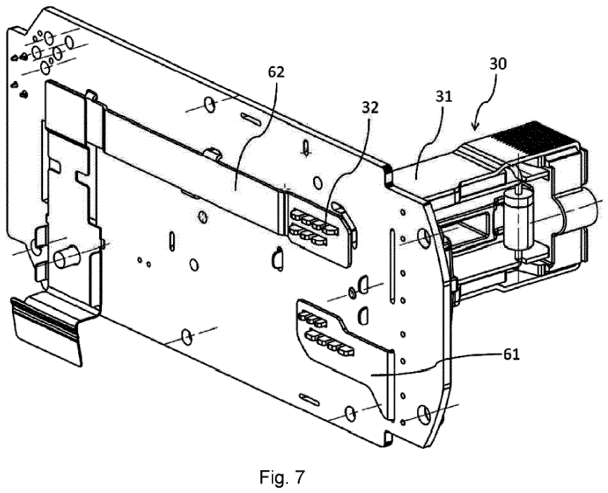

Fig. 6 is a schematic perspective view of the power tool connection end 30 and the printed circuit board (PCB) 40 of a battery pack 20 according to an embodiment of the present invention, wherein the electrical connection between the power tool connection end 30 and the PCB 40 is shown. Fig. 7 is a schematic perspective view, taken from another perspective, of the power tool connection end 30 and PCB 40 of a battery pack 20 according to an embodiment of the present invention.

As shown in Fig. 6 and Fig. 7, the power tool connection end 30 is disposed on the PCB 40. The power tool connection end 30 comprises a metal sheet electrical terminal 31, which extends vertically perpendicular to the plane of the PCB 40. In one embodiment of the present invention, the metal sheet electrical terminal 31 is directly electrically connected to the PCB 40. For example, the metal sheet electrical terminal 31 is an integral electrical terminal directly connected to the PCB 40 to electrically connect from the PCB to the electrical terminal, replacing any additional wires used in a conventional design. Establishing a direct connection to the PCB 40 with an integral electrical terminal 31 allows a reduction in the heat generated during the operation of the battery pack and provides greater safety at higher currents. In addition, compared with connections by welding wires in a conventional design, the integral electrical terminal 31 can provide more reliable electrical connections. The top of the power tool connection end 30 further comprises a heat-insulating plate 317, and the heat-insulating plate 317 is located between the metal sheet electrical terminal 31 and the outer housing. Thus, heat generated by the metal sheet electrical terminal 31 is prevented from being transmitted to the outer housing and melting the outer housing. As shown in the figures, the heat-insulating plate 317 substantially covers the metal sheet electrical terminal 31. The heat-insulating plate may be formed of materials such as mica plates.

As shown in Fig. 7, in one embodiment of the present invention, the metal sheet electrical terminal 31 comprises a terminal lower end 32, and the terminal lower end 32 is electrically connected to the PCB 40. In a preferred embodiment of the present invention, a collector plate is electrically connected to the lower surface of the PCB 40, wherein, for example, the collector plate comprises a positive collector plate 61, the positive collector plate 61 used for electrical connection to the positive electrode of the battery unit 50; and a negative collector plate 62, the negative collector plate 62 used for electrical connection to the negative electrode of the battery unit 50. In one embodiment of the present invention, the terminal lower end 32 of the positive metal sheet electrical terminal 31 is electrically connected to the positive collector plate 61, and/or the terminal lower end 32 of the negative metal sheet electrical terminal 31 is electrically connected to the negative collector plate 62. High currents are transmitted to the electrode terminals through the collector plates, which minimises the direct flow of high currents on the PCB to reduce the heating of the PCB.

In one embodiment of the present invention, the metal sheet electrical terminal 31 is designed with a single metal sheet located substantially in the same plane, in which case the metal sheet electrical terminal 31 has a single terminal lower end 32 electrically connected to the PCB 40 and to the corresponding collector plate.

Fig. 8 is a sectional view of the power tool connection end of a battery pack according to an embodiment of the present invention and the PCB taken along the line B-B in Fig. 6. In a preferred embodiment of the present invention, the metal sheet electrical terminal 31 adopts a substantially inverted U-shaped structure extending along the power tool connection end, as shown in Fig. 8. In other words, the metal sheet electrical terminal 31 is formed into a substantially inverted U-shaped structure by bending a single metal sheet that is substantially in the same plane backwards about 180 degrees at the approximate midpoint of its longitudinal direction, and the two legs of the U-shaped structure are substantially parallel to each other. In one embodiment of the present invention, each leg comprises a terminal lower end 32. Therefore, each metal sheet electrical terminal 31 has two terminal lower ends 32, each terminal lower end 32 being electrically connected to the PCB 40 and to the corresponding collector plate. In other words, the metal sheet electrical terminal 31 adopts a two-path design, wherein each leg is electrically connected to the PCB 40 and the corresponding collector plate, which means that the metal sheet electrical terminal 31 has two current paths in parallel to reduce or lower the current flowing through each leg or terminal lower end 32 to reduce its current intensity, thus reducing the heating thereof. Further, using a metal sheet electrical terminal 31 with more than one leg has the additional advantage of the formation of a redundant structure, wherein even if the terminal lower end 32 of one leg is electrically disconnected from the PCB 40 or the corresponding collector plate, the other leg remains electrically connected to the PCB 40 and the corresponding collector plate, and so the battery pack can still supply power to the power tool 100 through this other leg, thus ensuring the proper operation of the power tool 100. The U-shaped structure can also provide a certain degree of elasticity, ensuring a tighter electrical connection with another joint, which effectively reduces the heating of the connecting parts.

Continuing to refer to Fig. 8, the U-shaped structure comprises a bottom portion 314 located on the upper side and a top portion 315 located on the lower side. In one embodiment of the present invention, the lower part of the leg or the terminal lower end 32 forms the top portion of the U-shaped structure. In one embodiment of the present invention, the bottom portion 314 of the U-shaped structure is wider than the top portion 315 of the U-shaped structure. For example, as shown in Fig. 8, the bottom portion 314 comprises a width d1, and the top portion 315 comprises a width d2, wherein d2 < d1. In other words, as shown in Fig. 8, the U-shaped structure protrudes outwards relative to the top portion 315 at the bottom portion 314. In one embodiment of the present invention, the bottom portion 314 of the U-shaped structure forms an electrical contact portion for connecting to the electrical terminals of the power tool. In one embodiment of the present invention, the bottom portion 314 protrudes outwards relative to the top portion 315, making it more convenient to connect the U-shaped structure to the electrical terminals of the power tool.

As shown in Fig. 8, the positive metal plate electrical terminal 31 on the left comprises two legs parallel to each other, each leg having a terminal lower end 32. Each terminal lower end 32 passes through the PCB 40 and the positive collector plate 61. The PCB 40 has a corresponding slit at a position corresponding to the terminal lower end 32, through which the terminal lower end 32 may pass and is electrically connected to the terminal lower end 32 at that position. Similarly, the positive collector plate 61 has a corresponding slit at a position corresponding to the terminal lower end 32, through which the terminal lower end 32 may pass and is electrically connected to the terminal lower end 32 at that position. Similarly, the negative metal plate electrical terminal 31 on the right also comprises two legs parallel to each other, each leg having a terminal lower end 32. Each terminal lower end 32 passes through the PCB 40 and the negative collector plate 62. The PCB 40 has a corresponding slit at a position corresponding to the terminal lower end 32, through which the terminal lower end 32 may pass and is electrically connected to the terminal lower end 32 at that position. Similarly, the negative collector plate 62 has a corresponding slit at a position corresponding to the terminal lower end 32, through which the terminal lower end 32 may pass and is electrically connected to the terminal lower end 32 at that position.

Indeed, in another embodiment, the metal sheet electrical terminal 31 may also adopt another shape and structure. For example, the metal sheet electrical terminal 31 may be in the form of an integral metal sheet with three or more legs, wherein each leg is correspondingly electrically connected to the PCB 40 and to the corresponding collector plate.

A plurality of heat sinks may also be arranged in the battery pack so that heat generated inside the battery pack is better dissipated into the environment. For example, a plurality of openings may be provided in the battery pack housing 21 of battery pack 20 to improve the heat dissipation effect of the battery pack and help reduce the temperature inside the battery pack. In an embodiment, cooling fins may also be provided on the exposed channel walls, to increase the heat dissipation area and improve the heat dissipation efficiency.

Although this description has been given according to implementations, it is not that each implementation comprises only one independent technical solution, this description has been given in this manner only for the sake of clarity, and those of ordinary skill in the art should treat the description as an entirety, wherein the technical solutions provided in the embodiments may also be appropriately combined to form other implementations understandable to those of ordinary skill in the art. The scope of the present invention is defined by the attached claims, rather than by the above description. Thus, it is intended that all modifications falling within the meaning and scope of equivalent key elements of the claims shall be included in the present invention.

It is readily apparent to those of ordinary skill in the art that the present invention is not limited to the details given in the above-described exemplary embodiments, and that the present invention may be implemented in other specific modes without departing from the spirit or basic characteristics of the present invention. Thus, the above embodiments should be regarded as demonstrative and non-limiting.

## Claims

1. Battery pack comprising:
a battery pack housing;
a battery unit accommodated in the battery pack housing;
a printed circuit board (PCB) comprising a control circuit and accommodated in the battery pack housing; and
a power tool connection end accommodated in the battery pack housing and disposed on the PCB;
wherein, the power tool connection end comprises an integral metal sheet electrical terminal, and, when the battery pack is mounted on the power tool, the metal sheet electrical terminal is electrically connected to an electrical connector of the power tool, the metal sheet electrical terminal having a terminal lower end, and the terminal lower end being directly electrically connected to the PCB.

2. Battery pack according to Claim 1, wherein the metal sheet electrical terminal has a substantially inverted U-shaped structure, the U-shaped structure extending along the power tool connection end.

3. Battery pack according to Claim 2, wherein the two legs of the U-shaped structure each comprise a terminal lower end, each terminal lower end being directly electrically connected to the PCB.

4. Battery pack according to Claim 3, wherein the metal sheet electrical terminal comprises a positive metal sheet electrical terminal and a negative metal sheet electrical terminal, the positive metal sheet electrical terminal and the negative metal sheet electrical terminal being separated by a spacer.

5. Battery pack according to Claim 3, wherein a bottom portion of the U-shaped structure is wider than a top portion of the U-shaped structure.

6. Battery pack according to Claim 5, wherein the bottom portion of the U-shaped structure is formed with an electrical contact portion for connecting to the electrical terminals of the power tool.

7. Battery pack according to Claim 4, wherein the positive metal sheet electrical terminal and the negative metal sheet electrical terminal are moulded together with the spacer.

8. Battery pack according to Claim 1, wherein the metal sheet electrical terminal is in the form of an integral metal sheet with three or more legs, each leg comprising a terminal lower end, and each terminal lower end being directly electrically connected to the PCB.

9. Battery pack according to any one of Claims 1 to 8, wherein,
the metal sheet electrical terminal comprises a positive metal sheet electrical terminal and a negative metal sheet electrical terminal, each of the positive metal sheet electrical terminal and the negative metal sheet electrical terminal having a terminal lower end, and each terminal lower end being directly electrically connected to the PCB.

10. Battery pack according to any one of Claims 1 to 8, wherein,
the battery pack further comprises a heat-insulating plate substantially covering the metal sheet electrical terminal.

11. Battery pack according to any one of Claims 1 to 8, wherein the battery pack further comprises a collector plate electrically connected to the PCB on the side of the PCB opposite to the power tool connection end.

12. Battery pack according to Claim 11, wherein the collector plate comprises a positive collector plate configured to be electrically connected to the positive electrode of the battery unit, and a negative collector plate configured to be electrically connected to the negative electrode of the battery unit.

13. Battery pack according to Claim 12, wherein the metal sheet electrical terminal comprises a positive metal sheet electrical terminal and a negative metal sheet electrical terminal, the terminal lower end of the positive metal sheet electrical terminal being directly electrically connected to the positive collector plate, and/or the terminal lower end of the negative metal sheet electrical terminal being directly electrically connected to the negative collector plate.

14. Battery pack according to Claim 10, wherein a plurality of electrical terminals are provided at the top of a protruding column, and the metal sheet electrical terminal is electrically connected to an electrical terminal of the protruding column, the electrical terminal of the protruding column being configured to be electrically connected to an electrical connector in the base of the power tool.

15. Power tool, comprising the battery pack according to any one of the preceding claims.
